# EUROPÄISCHE PATENTSCHRIFT

(11) **EP 4 211 608 B1**
(45) Veröffentlichungstag und Bekanntmachung des Hinweises auf die Patenterteilung: **18.02.2026**
(21) Anmeldenummer: 21769433.0
(22) Anmeldetag: 30.08.2021
(51) Int. Cl.: G06K 19/077

(54) **RFID-ETIKETT**
RFID LABEL
ÉTIQUETTE RFID

(30) Priorität: 10.09.2020 DE 102020123647; 23.12.2020 DE 102020134854
(43) Veröffentlichungstag der Anmeldung: 19.07.2023
(73) Patentinhaber: etifix GmbH, 72661 Grafenberg (DE)
(72) Erfinder: BOHN, Martin, 72762 Reutlingen (DE); DUDZIK, Claus-Udo, 72661 Grafenberg (DE); BRANZ, Horst, 72555 Metzingen (DE)
(74) Vertreter: Pfiz/Gauss Patentanwälte PartmbB
(86) Internationale Anmeldenummer: PCT/EP2021/073911
(87) Internationale Veröffentlichungsnummer: WO 2022/053346

(56) Entgegenhaltungen:
- EP-A1- 2 535 849
- EP-A1- 3 407 262
- CN-A- 103 065 187
- CN-A- 110 110 833
- JP-A- 2018 078 525
- JP-A- 2020 046 834
- US-A1- 2011 017 833

## Beschreibung

Die Erfindung betrifft ein umweltfreundliches, selbstklebendes und flexibles RFID-Etikett zur Anwendung insbesondere auf gekrümmten metallischen Oberflächen sowie auf mit Flüssigkeiten befüllten Behältern im Frequenzbereich UHF (860 - 960 MHz) und ein Verfahren zu dessen Herstellung. In der weiteren Beschreibung wird dieses RFID-Etikett als On-Metal-Tag oder OM-Tag bezeichnet.

Passive RFID-Etiketten bestehen in der Regel aus einem bedruckten oder bedruckbaren Deckmaterial, einem darunterliegenden Inlay mit Chip und Antenne auf einem PET-Substrat und einem passenden Klebstoff zur Haftung auf der Oberfläche des Objektes. Auf dem Chip werden die Daten gespeichert, z. B. eine Seriennummer und über die Antenne mit einem UHF Lesegerät erfasst. Eine metallische Umgebung oder Flüssigkeiten in direkter Nähe des RFID-Etiketts wirken sich durch eine Verstimmung der Antenne negativ auf die Lesereichweite des RFID-Etiketts aus, bis hin zur Nichterfassung bei direktem Aufkleben auf eine elektrisch leitfähige Oberfläche oder auf mit Flüssigkeiten befüllten Behältern.

Zur Herstellung von RFID-Inlays für den UHF Frequenzbereich sind bereits verschiedene Varianten bekannt:
Bei einer ersten Variante erfolgt eine Direktbestückung der Antenne auf das Substrat. Dies bedeutet, dass die Antenne bereits als einstückiges Bauelement vorhanden ist. Die Herstellung kann durch Ätzen oder durch Drucken oder durch Stanzen erfolgen. Danach wird der Chip an der dafür vorgesehenen Stelle aufgesetzt und leitfähig verklebt, man nennt dies auch "bonden". Dieses Verfahren muss mit sehr geringen Toleranzen durchgeführt werden. Dies führt naturgemäß zu bestimmten Maschinenanforderungen und auch zu höheren Kosten. Die Antenne insgesamt, auch wenn sie einstückig ausgebildet ist, setzt sich in der Regel zusammen aus einem Loop, dies ist eine kleinere Antenne, die zentral angeordnet und die verbunden ist bzw. zumindest funktechnisch kommuniziert mit einer Sekundärantenne, die größer ist und dafür sorgt, dass das RFID-Etikett insgesamt aus einer größeren Reichweite abgelesen werden kann. In diesem ersten Beispiel ist eine galvanische Verbindung zwischen dem Loop und der Sekundärantenne vorhanden; es ist ein einstückiges Bauteil und als zweites separates Bauteil ist dann lediglich der Chip vorgesehen.

Bei einer zweiten Variante wird ebenfalls ein Aufbau aus Loop bzw. Primärantenne und Sekundärantenne verwendet, die auch einstückig ausgebildet sind, also eine galvanische Verbindung aufweisen. Der Unterschied zu dem ersten Beispiel ist, dass der Chip nicht direkt auf den Loop aufgebracht wird, sondern auf ein Zwischenbauteil, das als Strap bezeichnet wird oder auch als Butterfly aufgrund der Gestaltung mit zwei flügelähnlichen Auslegern. Dieser Strap wird als schmaler Streifen bzw. auf einem Streifen in großer Stückzahl hintereinander folgend vorgesehen und dann wird der Chip wiederum mit sehr großer Präzision auf den Strap aufgebracht. Danach wird der Strap als eine Art Aufkleber auf den Loop bzw. die Primärantenne mit einem galvanischen Kontakt aufgebracht. Für die Funktion des Inlays spielt bei dieser Technik die Genauigkeit der Positionierung des Straps auf der Primärantenne eine große Rolle. Auf der Kostenseite liegt diese Ausführungsform ungefähr wie auch die vorgenannte erste Ausführungsform je nach Gestaltung und Größe der Sekundärantenne bei wenigen Euro-Cent pro Stück bei einer Stückzahl in der Größenordnung von Millionen.

Bei einer dritten Variante wird zuerst der UHF-Loop hergestellt, also die Primärantenne. Dann wird der Chip wiederum mit hoher Präzision an der dazu bestimmten Stelle auf dem UHF-Loop angeordnet. Dies ist dann eine Art Zwischenbauteil oder Zwischenprodukt, das auf einer Rolle in hoher Stückzahl bereitgehalten werden kann. Separat wird dann die Sekundärantenne hergestellt, und die Sekundärantenne kann wieder auf unterschiedliche Arten wie Ätzen, Stanzen, Drucken hergestellt werden. Das Besondere hierbei ist, dass der UHF-Loop bei dem Zusammenfügen nicht galvanisch kontaktiert wird mit der Sekundärantenne, sondern durch elektromagnetische Einkopplung an die Sekundärantenne angekoppelt wird. Eine besondere weitere Eigenschaft dieser dritten Ausführungsform besteht darin, dass aufgrund der fehlenden galvanischen Verbindung zwischen dem UHF-Loop und der Sekundärantenne eine Anordnung des UHF-Loops in einem Abstand von der Sekundärantenne möglich ist. Dies bedeutet beispielsweise, dass die Sekundärantenne auf einer Seite eines Blattes oder eines Kartonstücks angeordnet ist und der UHF-Loop auf der anderen Seite, so dass eine Trennung im Bereich von wenigen Zehntel Millimetern bis zu 1 mm bis maximal sogar 10 mm möglich ist. Bei den zwei erstgenannten Ausführungsformen ist durch die galvanische Verbindung eine derartige Trennung nicht möglich. Durch die getrennte Konstruktion oder den getrennten Aufbau liegen die Kosten für diese Technik etwas höher als bei den beiden erstgenannten Varianten. Der modulare Aufbau bietet für die Gestaltung und Herstellung jedoch große Vorteile wie beispielsweise der Einsatz von Dual-Frequency Loops, mit einem Chip, der sowohl im UHF-Bereich (860 - 960 MHz) als auch im HF-Bereich (13,56 MHz) einsetzbar ist. Der Chip ist neben dem UHF-Loop auch noch mit einer HF-Antenne verbunden und kann mit UHF Lese- und Schreibgeräten oder auch HF-Lese- und Schreibgeräten, wie beispielsweise ein NFC-fähiges Smartphone, erfasst werden. Der im Weiteren zusammenfassend als UHF-Loop bezeichnete Loop kann deshalb auch als Dual-Frequency Loop ausgeführt sein und ist mit der Sekundärantenne im UHF Frequenzband elektromagnetisch gekoppelt.

Aus dem Stand der Technik sind verschiedene Methoden bekannt, ein RFID-Etikett auf einer metallischen Oberfläche oder auf mit Flüssigkeiten gefüllten Behältern anzubringen und auszulesen:
- Abstand zur metallischen Oberfläche erzeugen über Luft (Starre OM-Tags), Schaumstoff oder Absorbermaterialien;
- Gestaltung des OM-Tags als Flag-Tag, d. h. das Etikett steht als Fahne von der Oberfläche ab;
- Integration der Antenne in das metallische Objekt als Schlitzantenne;
- Gestaltung und Auslegung der UHF-Antenne als PIFA-Antenne (Planar Inverted F Antenna) mit metallischem Untergrund zur Abschirmung des Hintergrunds.

Ausgangspunkt der Erfindung sind die als Stand der Technik bezeichneten flexiblen UHF On-Metal-Tags mit einer direkt kontaktierten, geätzten Aluminium UHF-Antenne auf einem PET Trägersubstrat, gefaltet als PIFA-Antenne und mit einer ca. 2 mm dicken Schaumlage zwischen den leitenden Flächen der Antenne, mit folgenden Nachteilen:
- Die OM-Tags sind nicht flexibel. Durch die außenliegenden leitenden Antennenflächen werden beim Anbringen der OM-Tags auf einer gekrümmten Oberfläche die inneren Spannungen so groß, dass es Falten im OM-Tag gibt und die Rückstellkräfte des Materials das OM-Tag mit der Zeit wieder ablösen oder aufstellen.
- Die OM-Tags sind nach der Herstellung unbedruckt und werden bevorzugt in einem Thermotransfer Drucker bedruckt und kodiert. Die am Markt üblichen Geräte können nur bis 0,3 mm dicke Etiketten bedrucken, bei 2 mm dicken OM-Tags müssen die Drucker stark modifiziert werden. Das Druckbild hat meist keine hohe Qualität.
- Bei der Kodierung der OM-Tags im Thermotransferdrucker muss darauf geachtet werden, dass der unten liegende Teil der metallischen OM-Antenne nicht als Abschirmung wirkt und die Kodierung behindert.
- Die Prozesse zur Herstellung der Antennen und die eingesetzten Materialien sind nicht umweltfreundlich.
- Bedingt durch die aufwendigen Prozesse in der Herstellung und in der Weiterverarbeitung und den verwendeten Folien aus PET sind die OM-Tags verhältnismäßig teuer.

Ein für die Ansprüche 7 und 8 gattungsgemäßes RFID-Etikett ist aus der JP 2018 078525 A bekannt. Ein für Anspruch 9 gattungsgemäßes RFID-Etikett ist aus CN 110 110 833 A bekannt. Weitere RFID-Etikette sind aus den Schriften CN 103 065 187 A, US 2011/017833 A1, JP 2020 046834 A, EP 2 535 849 A1 sowie EP 3 407 262 A1 bekannt.

Ausgehend hiervon besteht die Aufgabe der Erfindung darin, einen möglichst umweltfreundlichen, kostengünstigen, dünnen und flexiblen OM-Tag bereitzustellen.

Zur Lösung dieser Aufgabe werden die in den unabhängigen Patentansprüchen angegebenen Merkmalskombinationen vorgeschlagen. Vorteilhafte Ausgestaltungen und Weiterbildungen der Erfindung ergeben sich aus den abhängigen Ansprüchen.

Gemäß der Erfindung umfasst das Fertigungsverfahren in einer ersten Variante folgende Schritte:
- Ausstanzen der Sekundärantenne aus einer leitenden metallischen Schicht, vorzugsweise einer selbstklebenden Aluminiumfolie, und Abdecken der Sekundärantenne mit einer vorzugsweise transparenten selbstklebenden Folie, insbesondere einer Polypropylen- oder Polyethylenfolie;
- Ausstanzen eines Stegs aus einer selbstklebenden Schaumfolie;
- Aufbringen der Primärantenne auf die abgedeckte Sekundärantenne an einer dafür vorgesehenen Position und Laminieren eines selbstklebenden Deckmaterials auf einen Teilbereich der Oberseite der abgedeckten Sekundärantenne; und
- Ausstanzen eines Stegs aus einer selbstklebenden Schaumfolie;
- Aufbringen der Primärantenne auf die abgedeckte Sekundärantenne an einer dafür vorgesehenen Position und Laminieren eines selbstklebenden Deckmaterials auf einen Teilbereich der Oberseite der abgedeckten Sekundärantenne; und
- Aufbringen eines Klebstoffs auf einen Teilbereich der Oberseite der abgedeckten Sekundärantenne, Laminieren der Einheit aus Primär- und Sekundärantenne auf die selbstklebende Schaumfolie und Ausstanzen des zum späteren Falten vorgesehenen OM-Tags.

Gemäß einer zweiten Variante der Erfindung umfasst das Fertigungsverfahren folgende Schritte:
- Ausstanzen der Sekundärantenne aus einer leitenden metallischen Schicht, vorzugsweise einer selbstklebenden Aluminiumfolie, und Abdecken der Sekundärantenne mit einer transparenten selbstklebenden Folie; insbesondere einer Polypropylen- oder Polyethylenfolie;
- Ausstanzen eines Stegs aus einer selbstklebenden Schaumfolie;
- Laminieren eines selbstklebenden Deckmaterials auf einen Teilbereich der Oberseite der selbstklebenden Sekundärantenne und
- Aufbringen eines Klebstoffs auf einen Teilbereich der Oberseite der selbstklebenden Sekundärantenne, Laminieren auf die selbstklebende Schaumfolie und Austanzen des zum späteren Falten vorgesehenen UHF-Entkopplers;
- Herstellung eines UHF-Loop-Etiketts; und
- Aufbringen des UHF-Loop-Etiketts auf den UHF-Entkoppler zur Bildung des zum späteren Falten vorgesehenen RFID-Etiketts.

Gemäß einer dritten Variante der Erfindung umfasst das Fertigungsverfahren folgende Schritte:
- Herstellung eines UHF-Inlays mit Chip als einstückiges Bauteil, wobei die UHF-Antenne durch Ätzen, Drucken oder Stanzen auf ein Papier- oder Foliensubstrat aufgebracht ist und der UHF-Chip oder UHF-Strap direkt auf die UHF-Antenne gebondet ist,
- Austanzen eines Stegs aus einer selbstklebenden Schaumfolie,
- Laminieren eines selbstklebenden Deckmaterials auf einen Teilbereich der Oberseite des UHF-Inlays und Laminieren einer Transfer-Folie auf die komplette Unterseite des UHF-Inlays, und
- Aufbringen eines Klebstoffs auf einen Teilbereich der Oberseite des selbstklebenden UHF-Inlays, Laminieren auf die selbstklebende Schaumfolie und Ausstanzen des zum späteren Falten vorgesehenen OM-Tags.

Der erfindungsgemäße OM-Tag gemäß der ersten Fertigungsvariante ist gekennzeichnet durch einen schichtartigen Aufbau, durch ein silikonisiertes Trägermaterial mit einer ersten Klebstoffschicht, einer Schaumfolienlage, vorteilhaft mit einer mittig oder außermittig angeordneten Nut als spätere Falzhilfe, einer zweiten Klebstoffschicht, einer Sekundärantenne, einer dritten Klebstoffschicht, einer Folienlage, einer vierten Klebstoffschicht, mit der eine Primärantenne mit einem Chip auf der Folienlage aufgeklebt ist, einer fünften Klebstoffschicht, mit der das bedruckbare Deckmaterial die Primärantenne zumindest teilweise übergreifend auf der Folienlage aufgeklebt ist, sowie einer sechsten Klebstoffschicht, mit der der OM-Tag auf einer Oberfläche zu befestigen ist, wobei die sechste Klebstoffschicht mit einem silikonisierten Trägermaterial abgedeckt ist.

Der erfindungsgemäße OM-Tag gemäß der zweiten Fertigungsvariante ist gekennzeichnet durch ein silikonisiertes Trägermaterial, eine erste Klebstoffschicht, eine Schaumfolienlage, vorteilhaft mit einer mittig oder außermittig angeordneten Nut als spätere Falzhilfe, eine zweite Klebstoffschicht, eine Sekundärantenne, eine dritte Klebstoffschicht, eine Folienlage, eine vierte Klebstoffschicht, eine Schicht aus Deckmaterial, eine fünfte Klebstoffschicht, mit der der OM-Tag auf einer Oberfläche zu befestigen ist, wobei die fünfte Klebstoffschicht mit einem silikonisierten Trägermaterial abgedeckt ist, sowie ein UHF-Loop-Etikett.

Der erfindungsgemäße OM-Tag gemäß der dritten Fertigungsvariante ist gekennzeichnet durch ein silikonisiertes Trägermaterial, eine erste Klebstoffschicht, eine Schaumfolienlage, vorteilhaft mit einer mittig oder außermittig angeordneten Nut als spätere Falzhilfe, eine zweite Klebstoffschicht, ein UHF-Inlay als einstückiges Bauteil, eine dritte Klebstoffschicht, eine Schicht aus Deckmaterial, eine vierte Klebstoffschicht, mit der der OM-Tag auf einer Oberfläche zu befestigen ist, wobei die vierte Klebstoffschicht mit einem silikonisierten Trägermaterial abgedeckt ist.

Der OM-Tag besteht vorzugsweise aus einer kleinen Primärantenne mit galvanisch verbundenem UHF-Chip, dem UHF-Loop und einer faltbaren Sekundärantenne, die im gefalteten Zustand auf der gekrümmten, metallischen Oberfläche als λ/4-Strahler für entsprechende Reichweite der Lese- oder Schreibfunktion verantwortlich ist. Die faltbare Sekundärantenne mit dem Schaum als Zwischenraum oder Spacer wirkt als Entkoppler von der metallischen Oberfläche ähnlich einer PIFA-Antenne (Planar Inverted F-Antenna) und wird des Weiteren als OM-Antenne bezeichnet. Erst im gefalteten Zustand ist der OM-Tag auf metallischen Oberflächen einsetzbar, weil sich dann der notwendige Zwischenraum von ca. 2 mm zwischen den Antennenflächen einstellt. Der UHF-Loop und die OM-Antenne sind nicht galvanisch verbunden. Die Kopplung des UHF-Loops und der OM-Antenne ist über ein elektromagnetisches Feld ausgebildet.

Die Bereitstellung eines noch ungefaltenen OM-Tags bietet für den Benutzer den Vorteil, dass der OM-Tag sowohl auf ebenen als auch auf gekrümmten Flächen aufgeklebt werden kann, ohne dass in dem Materialverbund größere innere Spannungen auftreten, die zu einem Verwerfen des Materials und einem ungewollten Ablösen des OM-Tags von seinem Untergrund führen würden. Bei einem Aufkleben auf ebene Flächen empfiehlt sich ein Abnehmen des Etiketts von seiner Trägerfolie, ein Falten des Etiketts in seine Endform und dann das Aufkleben auf der Fläche. Bei einem Aufkleben auf eine gekrümmte Fläche ist es hingegen von Vorteil, wenn das Etikett nach dem Entfernen von seiner Trägerfolie zunächst mit seinem Klebebereich für die Oberfläche auf die gekrümmte Fläche geklebt wird und erst danach die Faltung vorgenommen wird. Der Abschnitt der silikonisierten Trägerfolie, der den Klebebereich für die Oberfläche abgedeckt hat, kann vor dem Falten noch als Anti-Haft Barriere zum Andrücken des ersten Flügels des OM-Tags genutzt werden. Die Materialschichten werden so ohne Erzeugung innerer Spannungen zusammengeführt.

In weiterer Ausgestaltung der Erfindung weisen zwei durch die Nut gebildete Flügel des ungefalteten Etiketts unterschiedliche Längen auf, derart dass der längere Flügel beim Aufkleben des Etiketts auf eine gekrümmte Fläche über den zuerst aufgeklebten kürzeren Flügel gefaltet wird und diesen mit einem entsprechend größeren Krümmungsradius spannungs- und verwerfungsfrei überdeckt, wobei aufgrund der größeren Länge des zweiten Flügels die freien Flügelenden des Etiketts bündig miteinander abschließen.

Die Primär- und Sekundärantennen sind vorzugsweise gedruckt oder gestanzt und werden auf Papier oder einer transparenten Folie, vorzugsweise einer aus Recyclat hergestellten PP- oder PE-Folie angeordnet. Der OM-Tag ist dadurch besonders nachhaltig bzw. umweltfreundlich gestaltet.

Durch den bevorzugten zweiteiligen Aufbau mit UHF-Loop und OM-Antenne können verschiedene Formate der OM-Antennen mit dem gleichen UHF-Loop bestückt werden. Das UHF-Loop kann als Standard-Bauteil in größeren Mengen hergestellt werden. Die OM-Antennen oder Entkoppler können auf Standardmaschinen ohne besondere Vorkehrungen der Chip-Verarbeitung hergestellt werden. Dadurch ergibt sich eine besonders kostengünstige Herstellung der OM-Tags.

Das im Fertigungsschritt 3 laminierte selbstklebende Deckmaterial kann auch als bedruckte und serialisierte Deckbahn mit Barcode, Datamatrix-Code oder Seriennummer verarbeitet werden. Dadurch entfällt später die aufwendige Bedruckung und Serialisierung im Thermotransfer-Drucker. Die Kodierung der OM-Tags kann hierbei berührungslos über einen Barcode-Scanner und UHF-Schreib-Leseeinheit in einem einfachen Rolle-zu-Rolle Prozess erfolgen. Als vorbedruckte Deckbahn auf einer Digitaldruckmaschine ist die Druckqualität in der Regel besser als in einem nachfolgenden Thermotransfer-Drucker oder anderem Etikettendrucker.

Eine weitere Möglichkeit der Herstellung der OM-Tags ist es, die UHF-Loops als kleines UHF-Loop-Etikett mit bedruckter, serialisierter und kodiertem Chip separat herzustellen und auf die ausgestanzte und noch nicht gefaltete OM-Antenne mit einem Etikettenspender in einem Rolle-zu-Rolle Prozess aufzuspenden.

Im Folgenden wird die Erfindung anhand von in der Zeichnung in schematischer Weise dargestellten Ausführungsbeispielen näher erläutert. Es zeigen
- Fig. 1: einen ersten Fertigungsschritt zur Herstellung der Sekundärantenne;
- Fig. 2: einen zweiten Fertigungsschritt zur Vorbereitung einer Schaumfolie als späteres Substrat für die Primär- und Sekundärantennen;
- Fig. 3: einen dritten Fertigungsschritt in dem die Primärantenne auf die Sekundärantenne aufgebracht wird;
- Fig. 4: einen vierten Fertigungsschritt in dem die Primär- und Sekundärantennen auf das Schaumfoliensubstrat aufgebracht werden;
- Fig. 5: einen Querschnitt durch einen faltbaren OM-Tag;
- Fig. 6: und 7 alternative Fertigungsschritte zu den in Fig. 3 und 4 dargestellten Schritten;
- Fig. 8: einen Querschnitt durch einen mit den in Fig. 6 und 7 dargestellten Schritten hergestellten OM-Antenne;
- Fig. 9: und 10 Fertigungsschritte zur Herstellung eines UHF-Loop-Etiketts dessen Aufspenden auf die OM-Antenne gemäß Fig. 8 zur Bildung eines OM-Tags;
- Fig. 11: einen Querschnitt durch den OM-Tag gemäß Fig. 10;
- Fig.12: und 13 alternative Fertigungsschritte zu den in Fig.3 und 4 dargestellten Schritten;
- Fig.14: einen Querschnitt durch einen mit den in Fig.12 und 13 dargestellten Schritten hergestellten faltbaren OM-Tag;
- Fig. 15: a bis f die Vorgehensweise beim Aufkleben des OM-Tags auf eine ebene Fläche; und
- Fig. 16: a bis j die Vorgehensweise beim Aufkleben des OM-Tags auf eine zylindrisch gekrümmte Fläche.

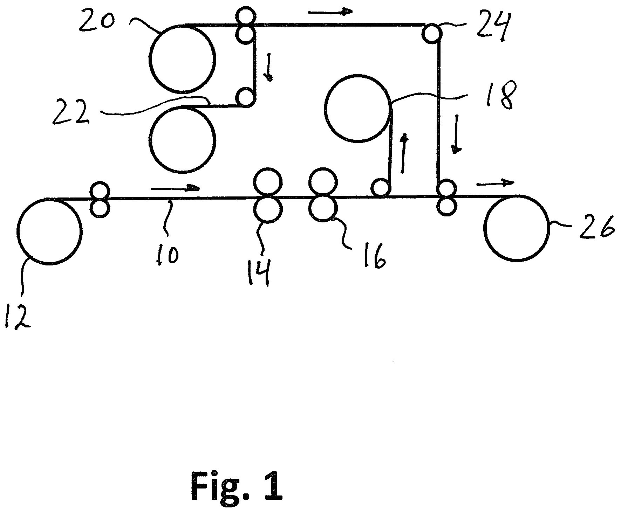

In dem in Fig. 1 schematisch dargestellten Fertigungsschritt eines OM-Tags, der insbesondere zum Anbringen an metallischen Gegenständen geeignet ist, wird eine selbstklebende Aluminiumfolie 10 von einer Rolle 12 zunächst einer Druckstation 14 zugeführt, in der eine Druckmarke als spätere Referenzmarke in nachfolgenden Fertigungsschritten in regelmäßigen Abständen auf die Folie 10 gedruckt wird. Danach erfolgt in einer Stanzstation 16 die Formgebung der Sekundärantenne. Das Stanzgitter wird von der Folie 10 entfernt und auf einer Rolle 18 aufgerollt. Von einer weiteren Vorratsrolle 20 wird eine selbstklebende Folie aus umweltfreundlichem Material, vorzugsweise Polypropylen- oder Polyethylenmaterial, zugeführt, die nach dem Entfernen ihres Trägersubstrats 22 über eine Umlenkrolle 24 auf die Oberseite der Sekundärantennen laminiert wird. Dieses erste Zwischenprodukt wird zur späteren Weiterverarbeitung auf einer Rolle 26 gespeichert.

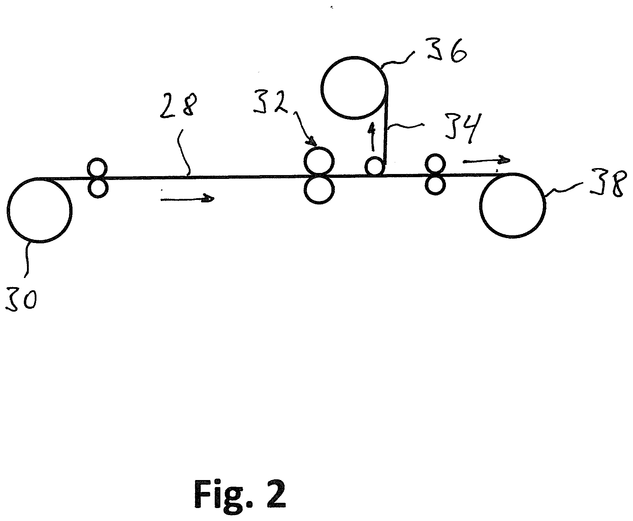

Bei dem in Fig. 2 dargestellten Fertigungsschritt wird eine selbstklebende Schaumfolie 28 als späteres Substrat für die Antennen vorgefertigt. Hierzu wird die Schaumfolie 28 von einer Spenderrolle 30 durch eine Stanzstation 32 geführt, in der in Laufrichtung der Schaumfolie 28 ein Steg 34 entfernt wird, der später gleichsam eine Scharnierfunktion für ein Falten des Endprodukts dieses Herstellungsverfahrens schafft. Der gestanzte Steg 34 wird von der Schaumfolie 28 entfernt und auf einer Rolle 36 aufgerollt. Auf dem Trägermaterial der Schaumfolie 28 verbleiben somit zwei breite Streifen aus dem Schaummaterial, das typischerweise eine Stärke von etwa 0,5 mm bis 2 mm aufweist. Dieses Zwischenprodukt wird zur späteren Weiterverarbeitung auf einer Rolle 38 gespeichert.

Der erste und der zweite Fertigungsschritt können zeitlich und örtlich unabhängig voneinander in beliebiger Reihenfolge erfolgen.

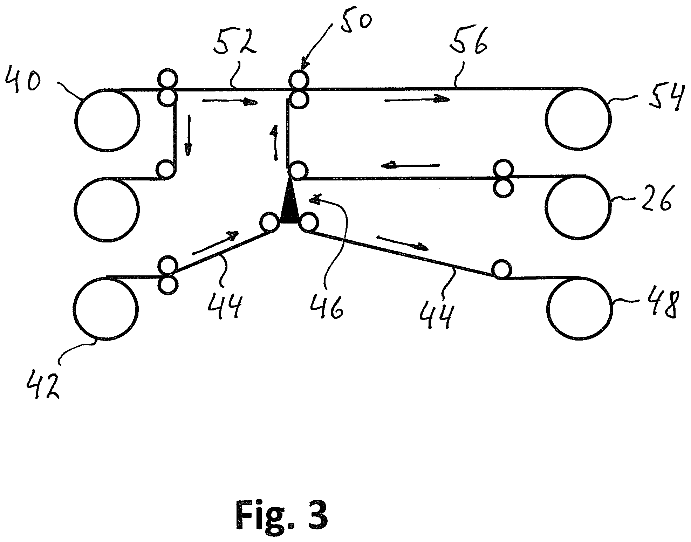

In dem in Fig. 3 dargestellten Fertigungsschritt erfolgt das Aufbringen der selbstklebenden Primärantenne an der dafür vorgesehenen Position der Sekundärantenne sowie ein Aufbringen eines bedruckbaren oder bereits bedruckten Deckmaterials auf eine Hälfte, die spätere Sichtseite des OM-Tags, des Antennenverbunds. Hierzu werden drei Spenderrollen bereitgestellt: Eine Rolle 40 mit dem Deckmaterial, eine Rolle 42 auf der die Primärantennen bevorratet sind, sowie die vorbereitete Rolle 26 mit den Sekundärantennen als Zwischenprodukt aus dem ersten Fertigungsschritt. Eine Trägerfolie 44 mit darauf angeordneten selbstklebenden Primärantennen wird einer Abschälvorrichtung 46 zugeführt, der ebenfalls die Folie mit den Sekundärantennen zugeführt wird, wobei abgeschälte Primärantennen an der dafür vorgesehenen Position der Sekundärantennen angeordnet werden. Die Trägerfolie 44 der Primärantennen wird auf einer Rolle 48 als Abfallmaterial aufgerollt. Der Verbund aus Primär- und Sekundärantenne wird in einer Laminierstation 50 mit dem von der Rolle 40 gespendeten Deckmaterial 52 versehen. Das so geschaffene weitere Zwischenprodukt wird auf einer Rolle 54 aufgerollt.

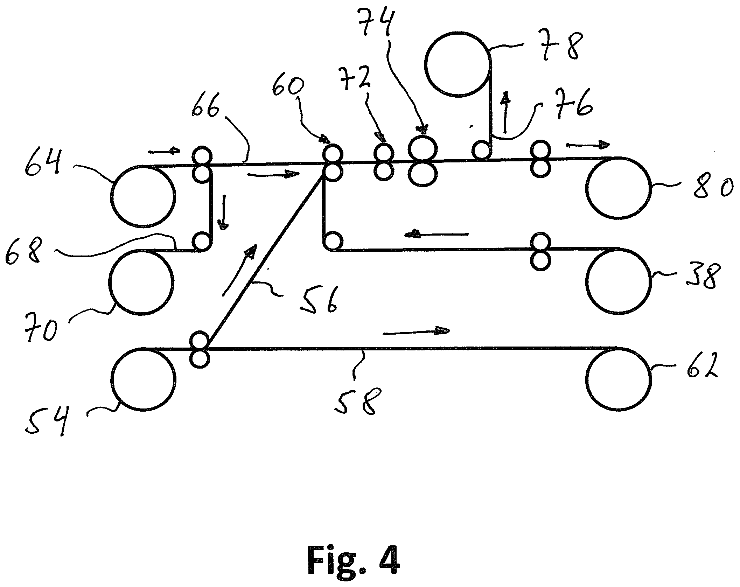

**In** dem in Fig. 4 dargestellten Fertigungsschritt werden die Zwischenprodukte gemäß Fig. 2 und 3 zusammengeführt. Als Basis dient das auf der Rolle 38 bevorratete Zwischenprodukt gemäß Fig. 2. Auf dieses wird der auf der Rolle 54 bevorratete Antennenverbund 56 nach Abziehen von seinem Trägermaterial 58 in einer Laminierstation 60 auflaminiert. Das Trägermaterial 58 wird auf einer Rolle 62 aufgerollt. Zusätzlich wird in der Laminierstation 60 eine auf einer Rolle 64 bevorratete Transfer-Folie 66 mit einem Klebstoff, der die spätere Kleberschicht zum Aufkleben des OM-Tags auf seinen Bestimmungsort darstellt, auf die nicht mit dem bedruckbaren Deckmaterial 52 versehene Seite des Antennenverbunds 56 aufgebracht. Die Trägerfolie 68 der Transferfolie 66 wird auf eine Rolle 70 aufgerollt. Nach dem Laminieren werden in nachfolgenden Schneid- und Stanzstationen 72, 74 die Endkonturen des OM-Tags hergestellt. Der Randbeschnitt 76 oder ein Stanzgitter wird auf einer Rolle 78 aufgerollt. Erfolgt die Weiterverarbeitung in einem Thermotransfer-Drucker, darf das Stanzgitter nicht vollständig abgezogen werden, damit der Druckkopf des Druckers auf einem gleichbleibenden Niveau arbeiten kann. Die faltbaren OM-Tags sind damit fertiggestellt und werden auf einer Rolle 80 aufgerollt. In dieser Form können die OM-Tags an den Endnutzer geliefert werden, der in einem Etikettendrucker Informationen auf das Deckmaterial 52 drucken kann.

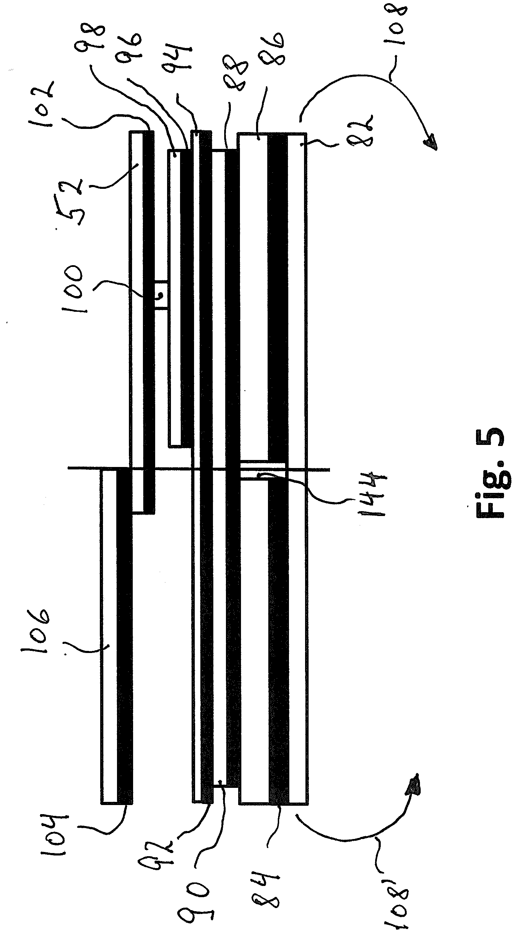

Fig. 5 zeigt schematisch den Schichtaufbau des OM-Tags vor dem Entfernen von seiner silikonisierten Trägerfolie 82 und dem Falten in die Endform. Der OM-Tag umfasst eine erste Klebstoffschicht 84, eine Schaumfolienlage 86, eine zweite Klebstoffschicht 88, eine Sekundärantenne 90, eine dritte Klebstoffschicht 92, eine Folienlage 94, eine vierte Klebstoffschicht 96, mit der eine Primärantenne 98 mit einem Chip 100 auf der Folienlage 94 aufgeklebt ist, eine fünfte Klebstoffschicht 102, mit der das bedruckbare Deckmaterial 52 die Primärantenne zumindest teilweise übergreifend auf der Folienlage aufgeklebt ist, sowie eine sechste Klebstoffschicht 104, mit der der OM-Tag an seinem Bestimmungsort befestigt wird. Die Klebstoffschicht 104 ist zunächst noch mit einer silikonisierten Trägerfolie 106 abgedeckt.

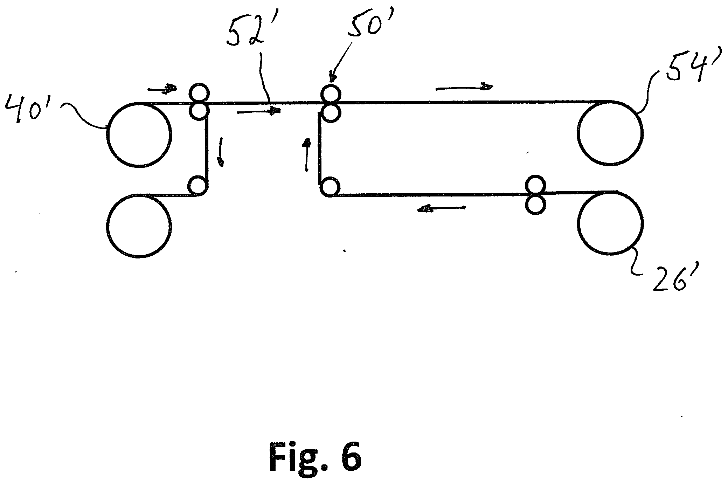

Gemäß einer in den Fig. 6 bis 11 dargestellten Variante der Erfindung wird der mechanisch und elektrostatisch empfindliche UHF-Loop mit Primärantenne und Chip erst am Ende der Herstellung des OM-Tags auf diesem angeordnet. Die in den Fig. 3 und 4 dargestellten Fertigungsschritte werden wie folgt abgewandelt: Wie in Fig. 6 dargestellt, wird der dritte Fertigungsschritt dahingehend abgewandelt, dass keine Aufspendung der selbstklebenden Primärantennen oder UHF-Loops auf das Produkt aus dem ersten Fertigungsschritt erfolgt. Es erfolgt in diesem Schritt lediglich ein Abrollen des Produkts aus dem ersten Fertigungsschritt gemäß Fig. 1 von einer Rolle 26' und ein Laminieren des Produkts mit einem von einer Rolle 40' gespendeten Deckmaterial 52' in einer Laminierstation 50'. Das Produkt dieses alternativen dritten Fertigungsschritts wird auf einer Rolle 54' aufgerollt.

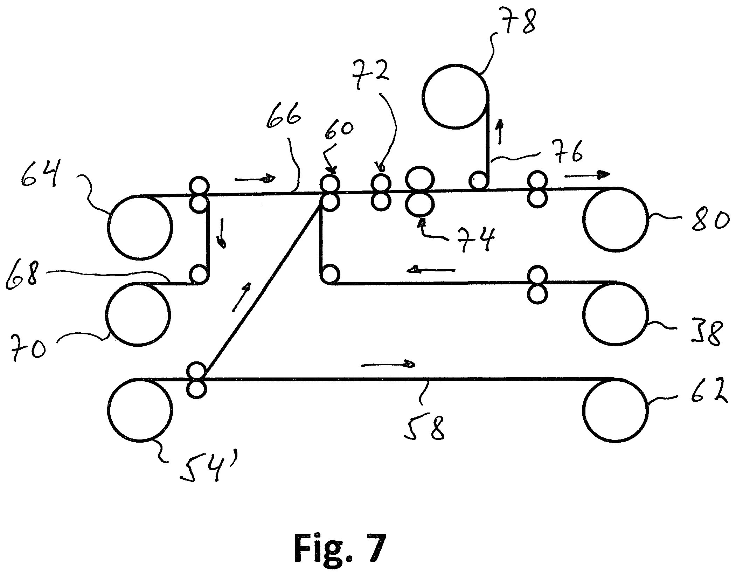

Der nachfolgende alternative vierte Fertigungsschritt gemäß Fig. 7 entspricht vollumfänglich dem in Fig. 4 dargestellten Fertigungsschritt, wobei nun von der Rolle 54' das Produkt aus dem vorhergehenden, alternativen dritten Fertigungsschritt gespendet wird. Im Übrigen kann zu den weiteren Maßnahmen dieses alternativen vierten Fertigungsschritts auf Fig. 4 verwiesen werden.

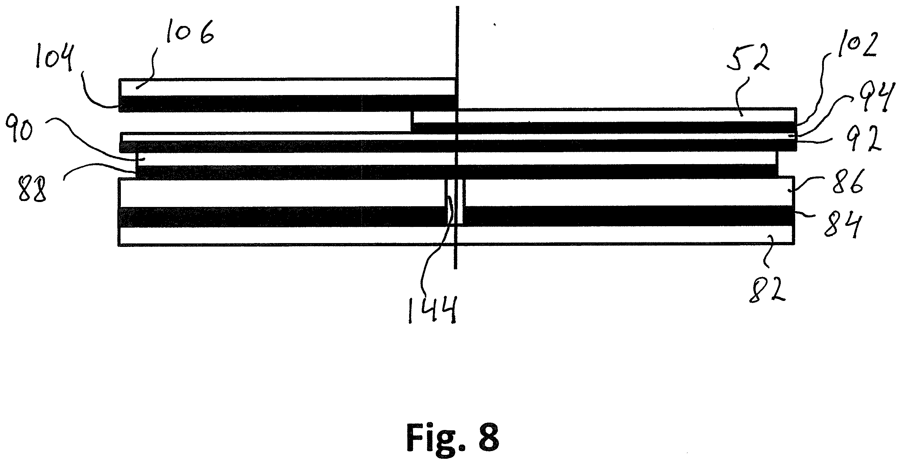

Das Produkt aus dem in Fig. 7 dargestellten Fertigungsschritt ist in Fig. 8 dargestellt. Im Vergleich zu dem in Fig. 5 dargestellten Produkt umfasst das Produkt gemäß Fig. 8 zwar die Sekundärantenne 90, nicht jedoch die Primärantenne 98 mit dem Chip 100. Das Produkt gemäß Fig. 8 kann als UHF-Entkoppler oder OM-Antenne bezeichnet werden. Durch Weglassen des mechanisch und elektrostatisch empfindlichen Chips 100 und der selbstklebenden Primärantenne 98 kann die Herstellung dieses Produkts auf normalen Verarbeitungs-Maschinen ohne besondere Vorkehrungen für die Chip- oder Inlay-Verarbeitung erfolgen.

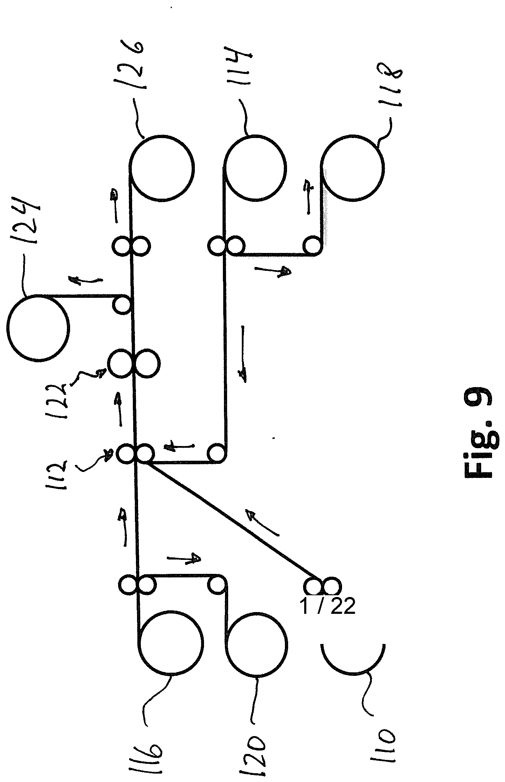

Die UHF-Loop-Etiketten mit Primärantenne und Chip für den UHF-Entkoppler oder die OM-Antenne werden in einem weiteren Fertigungsschritt gemäß Fig. 9 hergestellt. Trockene UHF-Loops mit Chip werden ohne Kleber von einer Rolle 110 gespendet und einer Laminierstation 112 zugeführt. Dort wird von unten eine Transferfolie von einer Rolle 114 und von oben ein selbstklebendes, bedrucktes oder bedruckbares Deckmaterial von einer Rolle 116 zugeführt. Das Trägerabfallmaterial der Transferfolie und des Deckmaterials wird auf Rolle 118 und 120 gesammelt. Die Endform der UHF-Loop-Etiketten wird in einer Stanzstation 122 hergestellt. Das Stanzgitter wird auf einer Rolle 124 aufgerollt und die UHF-Loop-Etiketten auf einer Rolle 126 bevorratet.

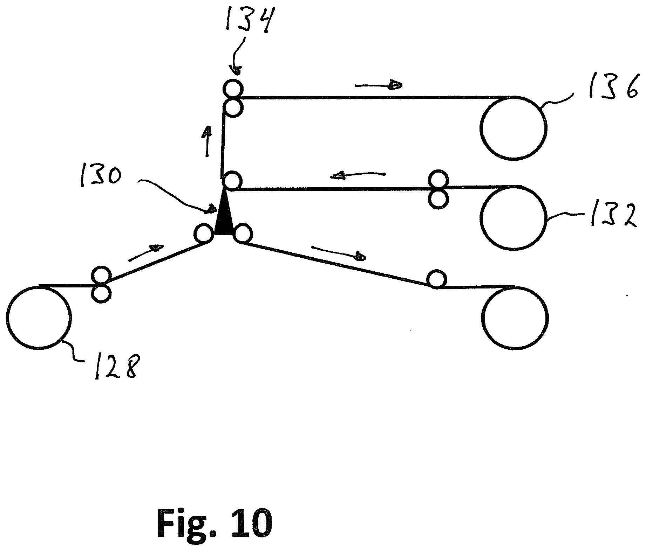

Das Zusammenführen der UHF-Entkoppler gemäß Fig. 8 und der in dem Verfahrensschritt gemäß Fig. 9 hergestellten UHF-Loop-Etiketten erfolgt in dem in Fig. 10 dargestellten Verfahrensschritt, der im Wesentlichen dem Verfahrensschritt gemäß Fig. 3 entspricht, wobei nun das bereits vorhandene Deckmaterial nicht mehr auflaminiert werden muss, die Rolle 40 also entfällt. UHF-Loop-Etiketten werden von einer Rolle 128 einer Abschälvorrichtung 130 zugeführt und auf die von einer Rolle 132 zugeführten UHF-Entkoppler oder OM-Antenne aufgebracht, durch eine Laminierstation 134 geführt und als fertiges Produkt auf einer Rolle 136 gesammelt.

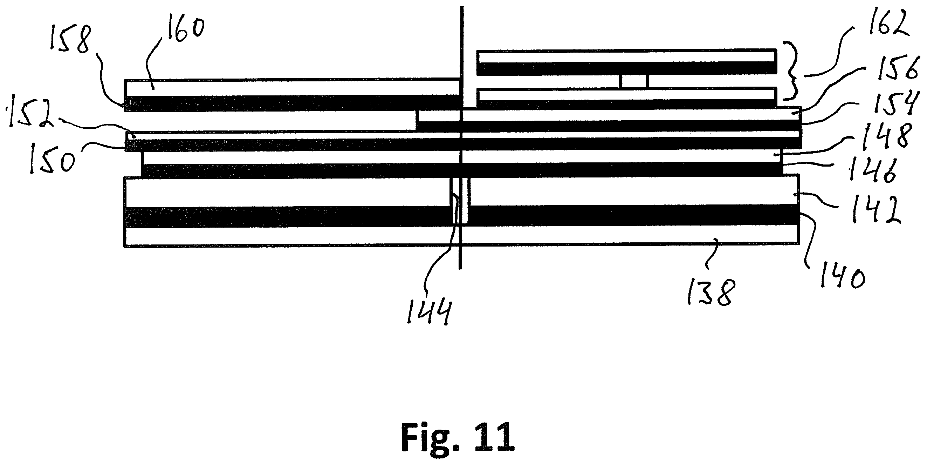

Das fertige Produkt gemäß Fig. 10 ist in Fig. 11 im Querschnitt dargestellt. Der OM-Tag gemäß Fig. 11 umfasst silikonisierte Trägerfolie138, eine erste Klebstoffschicht 140, eine Schaumfolienlage 142 mit einer vorhandenen Nut 144, eine zweite Klebstoffschicht 146, eine Sekundärantenne 148, eine dritte Klebstoffschicht 150, eine Folienlage 152, eine vierte Klebstoffschicht 154, eine Schicht aus Deckmaterial 156, eine fünfte Klebstoffschicht 158, mit der der OM-Tag auf einer Oberfläche zu befestigen ist, wobei die fünfte Klebstoffschicht 158 mit einem silikonisierten Trägermaterial 160 abgedeckt ist, sowie das insgesamt mit 162 bezeichnete UHF-Loop-Etikett.

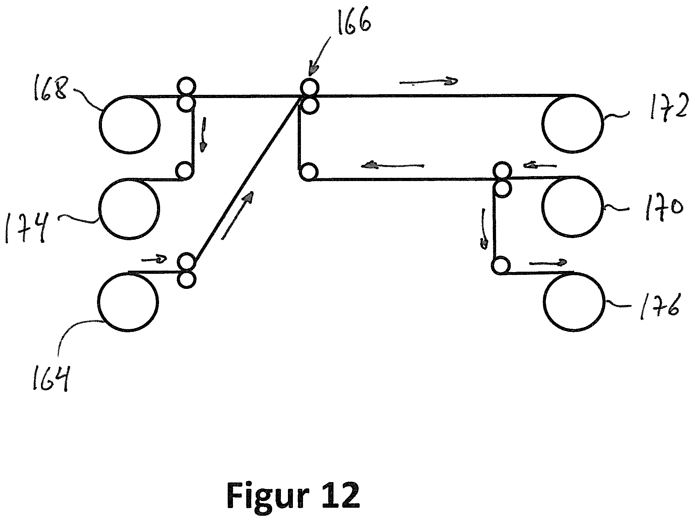

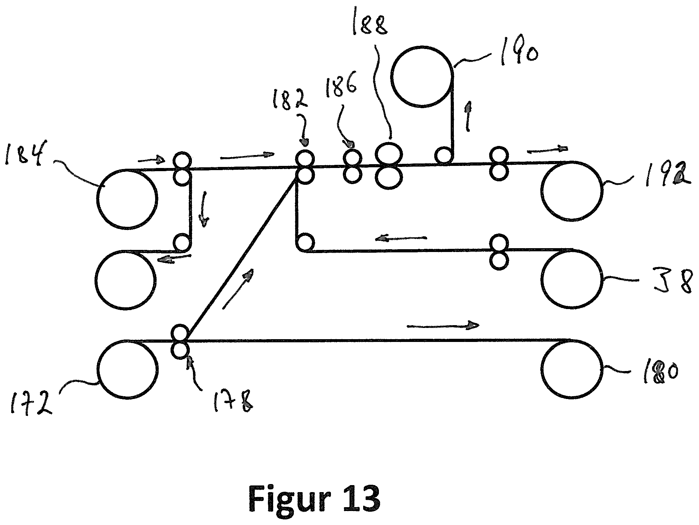

Bei der in den Fig. 12 und 13 dargestellten Verfahrensvariante wird zunächst (Fig. 12) ein gestanztes, gedrucktes oder geätztes UHF-Inlay als einstückiges Bauelement von einer Rolle 164 abgerollt und einer Laminierstation 166 zugeführt. Dort wird von oben ein Deckmaterial von einer Rolle 168 und von unten eine Transfer-Folie, die die Breite des UHF-Inlays aufweist, von einer Rolle 170 zugeführt. Das Produkt dieses Schrittes wird auf einer Rolle 172 zur Verwendung in dem nachfolgenden Verfahrensschritt aufgewickelt. Auf den Rollen 174 und 176 wird das silikonisierte Trägermaterial des Deckmaterials bzw. der Transfer-Folie aufgerollt.

Der in Fig. 13 dargestellte Verfahrensschritt entspricht dem in Fig. 4 dargestellten. Das auf der Rolle 172 bevorratete, laminierte UHF-Inlay wird in einer Vorzugseinheit 178 von der silikonisierten Trägerfolie getrennt, die als Abfall auf einer Rolle 180 gesammelt wird. In einer Laminierstation 182 werden die UHF-Inlays von oben mit einer Transfer-Folie von einer Rolle 184 und von unten mit der auf der Rolle 38 bevorrateten Schaumfolie als Produkt aus dem in Fig. 2 dargestellten Verfahrensschritt ausgerüstet. Nach dem Laminieren werden in nachfolgenden Schneid- und Stanzstationen 186, 188 die Endkonturen des OM-Tags hergestellt. Der Randbeschnitt oder ein Stanzgitter wird auf einer Rolle 190 aufgerollt. Die faltbaren OM-Tags sind damit fertiggestellt und werden auf einer Rolle 192 aufgerollt. In dieser Form können die OM-Tags an den Endnutzer geliefert werden, der in einem Etikettendrucker Informationen auf das Deckmaterial drucken kann.

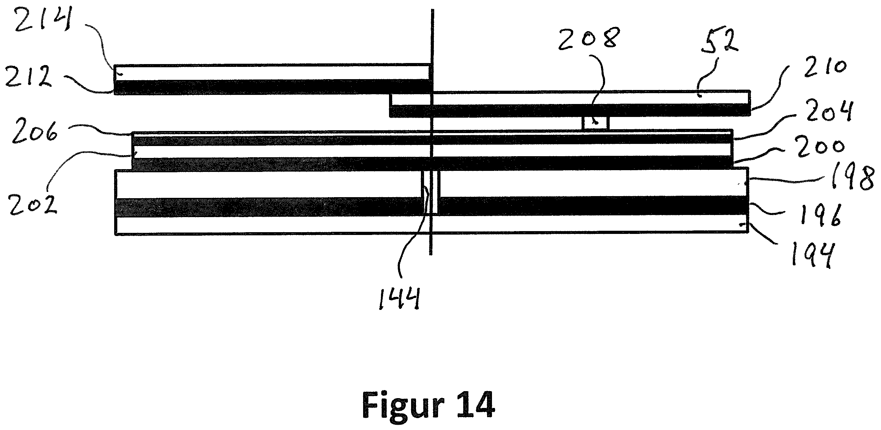

Fig. 14 zeigt schematisch den Schichtaufbau des OM-Tags gemäß Fig. 12 und 13 vor dem Entfernen von seiner silikonisierten Trägerfolie 194 und dem Falten in die Endform. Der OM-Tag umfasst eine erste Klebstoffschicht 196, eine Schaumfolienlage 198, eine zweite Klebstoffschicht 200, dem UHF-Inlay bestehend aus einem Substrat 202 aus Papier oder Kunststofffolie, einer dritten Klebstoffschicht 204, einer UHF-Antenne 206 sowie einem Chip 208 eine vierte Klebstoffschicht 210, mit der das bedruckbare Deckmaterial 52 auf der Folienlage aufgeklebt ist, sowie eine fünfte Klebstoffschicht 212, mit der der OM-Tag an seinem Bestimmungsort befestigt wird. Die Klebstoffschicht 212 ist zunächst noch mit einer silikonisierten Trägerfolie 214 abgedeckt.

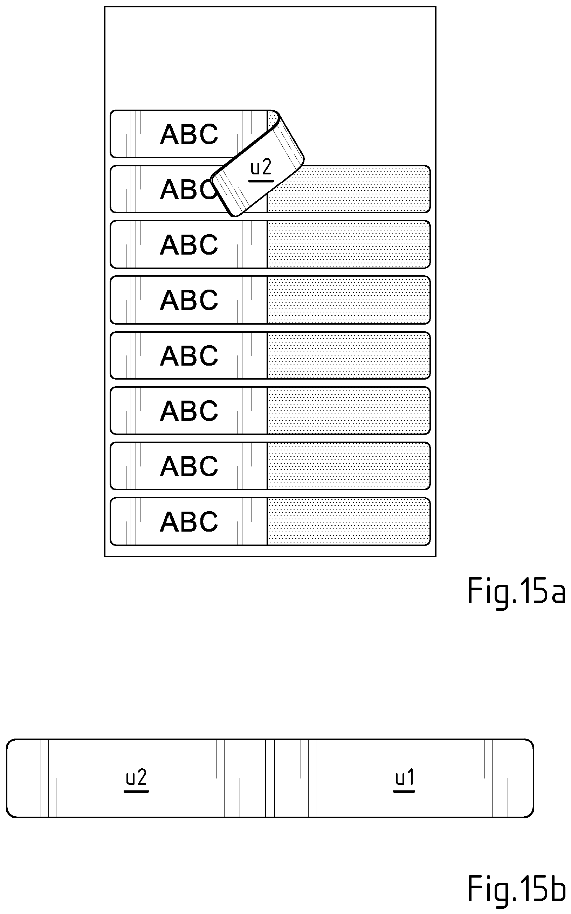

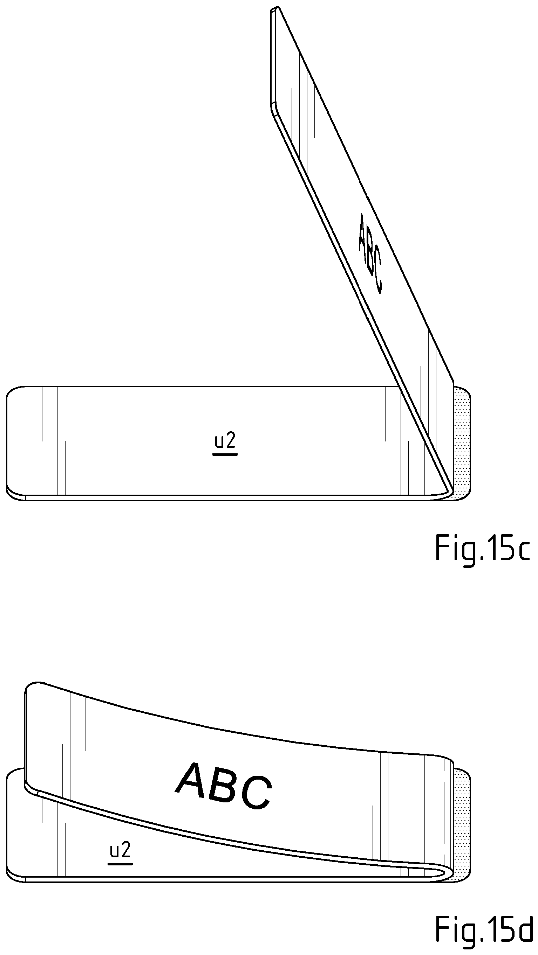

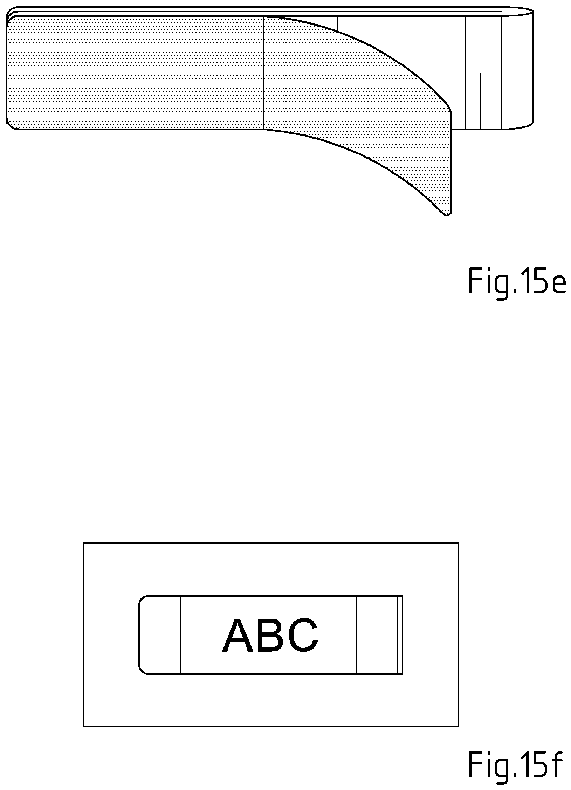

Zur Verwendung wird der OM-Tag gemäß Fig. 5 (und entsprechend die OM-Tags gemäß Fig. 8, 11 und 14) in einer ersten Anwendungsvariante zunächst von der silikonisierten Trägerfolie 82 entfernt. Hierdurch wird die Klebstoffschicht 84 freigelegt. Der OM-Tag wird nun in Richtung der Pfeile 108, 108' zusammengefaltet, wobei hilfreich ist, dass die Schaumfolienlage 86 in ihrem mittleren Bereich eine in dem zweiten Herstellungsschritt geschaffene Ausnehmung oder Nut 144 aufweist, die gleichsam ein Scharnier bildet. Dann wird die silikonisierte Trägerfolie 106 entfernt und die sechste Klebstoffschicht 104 freigelegt, mit der der OM-Tag an seinem Bestimmungsort befestigt wird. Das bedruckbare Deckmaterial 52 weist dann von dem Befestigungsort weg und ist für den Anwender lesbar. Diese Anwendungsvariante empfiehlt sich für das Befestigen des OM-Tags an ebenen Flächen, wie in Fig. 15 dargestellt: Zunächst (a) wird der OM-Tag von dem Träger abgenommen. Dann (b) wird der OM-Tag um 180° um seine Längsachse gedreht, so dass die mit u1 und u2 gekennzeichneten Flächen nach oben weisen. Danach (c, d) wird der OM-Tag gefaltet, so dass die Flächen u1 und u2 miteinander verklebt werden. Dann (e) wird die Silikonfolie abgezogen und (f) der OM-Tag auf die ebene Oberfläche aufgeklebt.

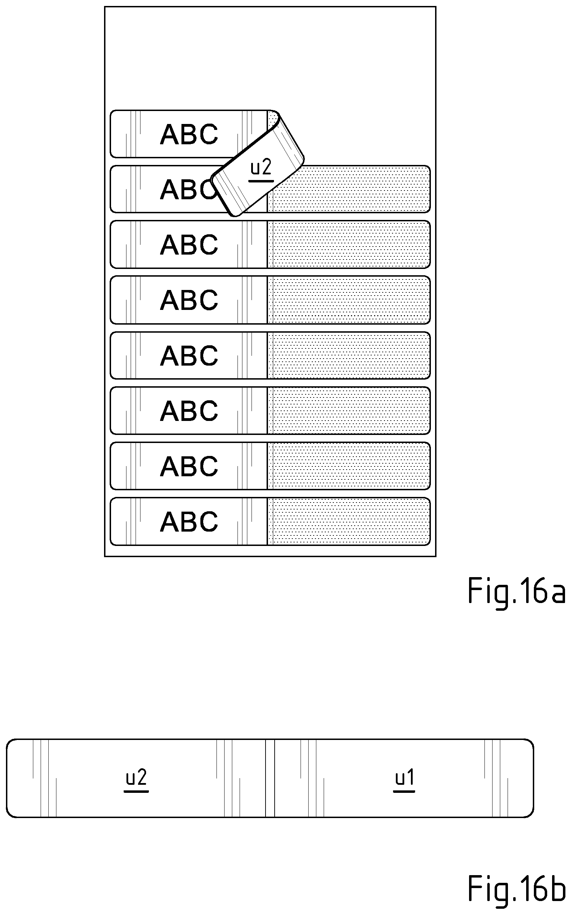

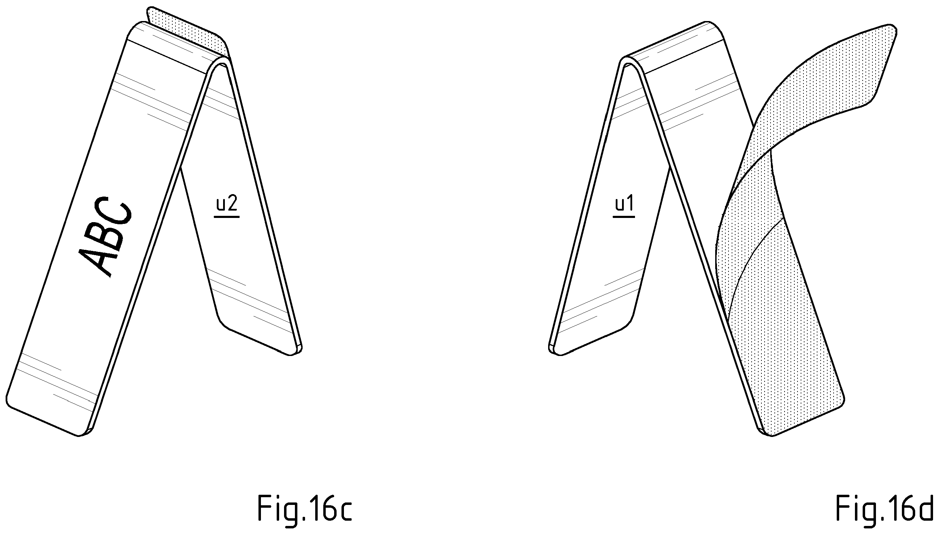

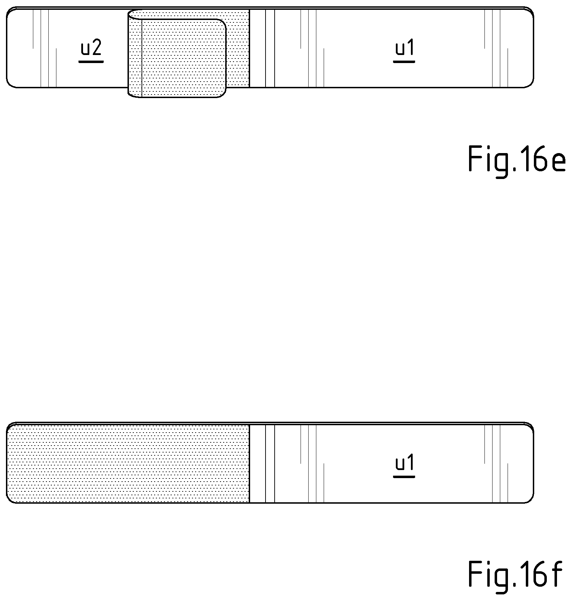

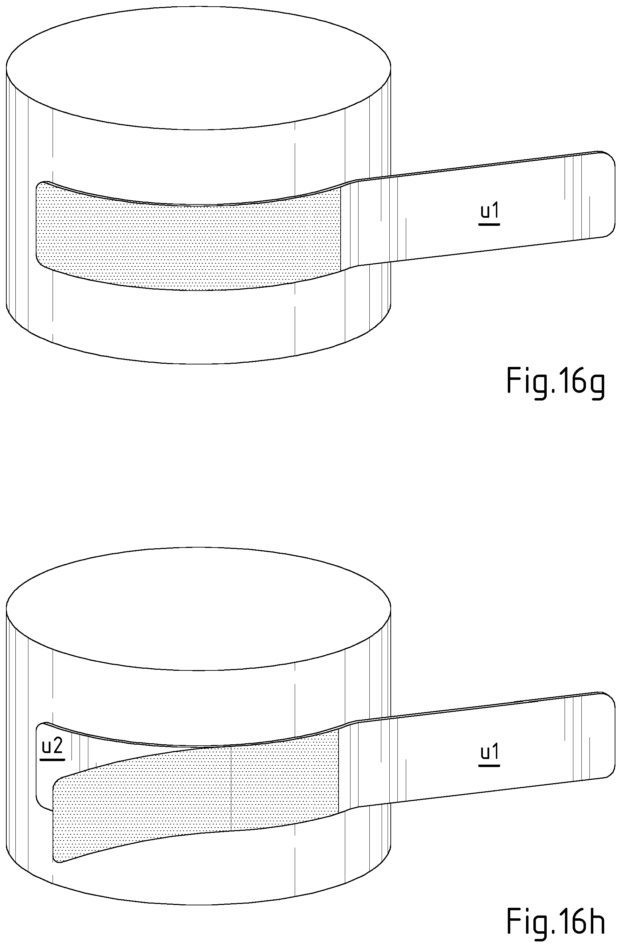

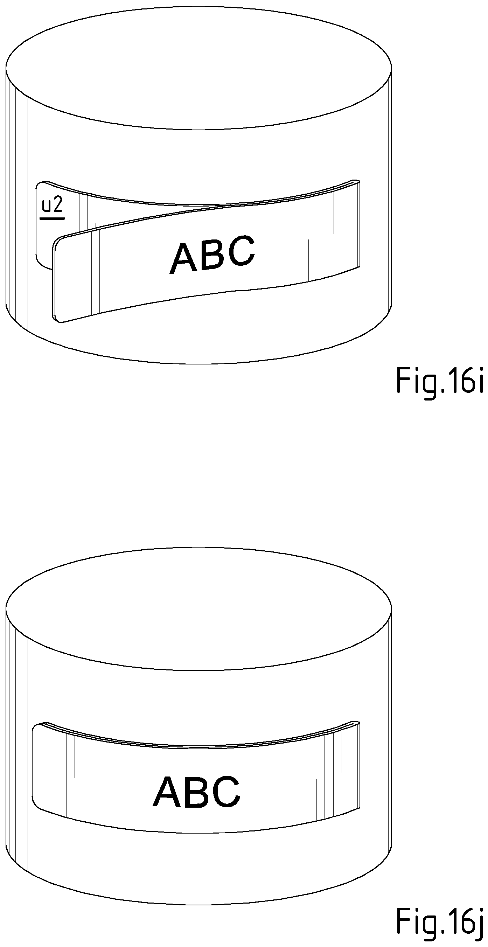

In einer zweiten Anwendungsvariante, die sich für gekrümmte Flächen empfiehlt, wird zunächst der OM-Tag von der silikonisierten Trägerfolie 82 entfernt, dann die silikonisierte Trägerfolie 106 abgezogen und der noch nicht gefaltete OM-Tag mit dem ersten Flügel an seinem Bestimmungsort befestigt. Der Abschnitt der silikonisierten Trägerfolie 106, der den Klebebereich für die Oberfläche abgedeckt hat, kann vor dem Falten des OM-Tags noch als Anti-Haft Barriere zum Andrücken des ersten Flügels des OM-Tags genutzt werden. Anschließend wird der freie Flügel des OM-Tags in Richtung des Pfeils 108 gefaltet. Da der zuerst aufgeklebte Flügel einen geringfügig kleineren Krümmungsradius aufweist als der zunächst noch freie Flügel nach dem Falten, erfolgt so eine spannungs- und verwerfungsfreie Verklebung der zwei Hälften der Schaumfolienlage 86. Zweckmäßig ist der zweite Flügel aufgrund des im gefalteten Zustand etwas größeren Radius länger als der erste Flügel ausgebildet, so dass die Flügelenden nach dem Falten bündig miteinander abschließen. Wie Fig 16 darstellt, wird zunächst (a, b) der OM-Tag wiederum vom Träger entfernt und gedreht. Dann (c, d) wird der OM-Tag gefaltet, jedoch nicht geschlossen, und die Silikonfolie abgezogen. Die Silikonfolie wird (e, f) als Handhabungshilfe auf die Klebefläche u2 aufgelegt und angedrückt. Dann kann (g) der erste Flügel an die gekrümmte Oberfläche angelegt und, da die obere Klebefläche von der Silikonfolie abgedeckt ist, angedrückt werden. Die Silikonfolie wird wieder von der Fläche u2 abgezogen (h) und der zweite Flügel über den ersten gefaltet und angedrückt werden (i, j), ohne dass in dem nun fertig aufgeklebten OM-Tag Spannungen oder Verwerfungen entstanden sind.

Der OM-Tag ist in seinem noch nicht gefalteten Auslieferungszustand für den Nutzer einfacher zu verarbeiten, insbesondere hinsichtlich des Rollen-Handlings, der Bedruckung und der Kodierung in handelsüblichen Etikettendruckern. Weiterhin erlaubt der modulare Aufbau des OM-Tags in weiten Bereichen eine an die jeweiligen Bedürfnisse angepasste Auswahl an Materialien und Bauform.

### Bezugszeichenliste

- 10: Aluminiumfolie / Folie
- 12: Rolle
- 14: Druckstation
- 16: Stanzstation
- 18: Rolle
- 20: Vorratsrolle
- 22: Trägersubstrat
- 24: Umlenkrolle
- 26, 26': Rolle
- 28: Schaumfolie
- 30: Spenderrolle
- 32: Stanzstation
- 34: Steg
- 36: Rolle
- 38: Rolle
- 40, 40': Rolle
- 42: Rolle
- 44: Trägerfolie
- 46: Abschälvorrichtung
- 48: Rolle
- 50, 50': Laminierstation
- 52, 52': Deckmaterial
- 54, 54': Rolle
- 56: Antennenverbund
- 58: Trägermaterial
- 60: Laminierstation
- 62: Rolle
- 64: Rolle
- 66: Transferfolie
- 68: Trägerfolie
- 70: Rolle
- 72: Schneidstation
- 74: Stanzstation
- 76: Randbeschnitt
- 78: Rolle
- 80: Rolle
- 82: Silikonisierte Trägerfolie
- 84: erste Klebstoffschicht
- 86: Schaumfolienlage
- 88: zweite Klebstoffschicht
- 90: Sekundärantenne
- 92: dritte Klebstoffschicht
- 94: Folienlage
- 96: vierte Klebstoffschicht
- 98: Primärantenne
- 100: Chip
- 102: fünfte Klebstoffschicht
- 104: sechste Klebstoffschicht
- 106: Silikonisierte Trägerfolie
- 108, 108': Pfeil
- 110: Rolle
- 112: Laminierstation
- 114: Rolle
- 116: Rolle
- 118: Rolle
- 120: Rolle
- 122: Stanzstation
- 124: Rolle
- 126: Rolle
- 128: Rolle
- 130: Abschälvorrichtung
- 132: Rolle
- 134: Laminierstation
- 136: Rolle
- 138: Silikonisierte Trägerfolie
- 140: erste Klebstoffschicht
- 142: Schaumfolienlage
- 144: Nut
- 146: zweite Klebstoffschicht
- 148: Sekundärantenne
- 150: dritte Klebstoffschicht
- 152: Folienlage
- 154: vierte Klebstoffschicht
- 156: Deckmaterial
- 158: fünfte Klebstoffschicht
- 160: Silikonisiertes Trägermaterial
- 162: UHF-Loop-Etikett
- 164: Rolle
- 166: Laminierstation
- 168: Rolle
- 170: Rolle
- 172: Rolle
- 174: Rolle
- 176: Rolle
- 178: Vorzugseinheit
- 180: Rolle
- 182: Laminierstation
- 184: Rolle
- 186: Schneidstation
- 188: Stanzstation
- 190: Rolle
- 192: Rolle
- 194: Silikonisierte Trägerfolie
- 196: erste Klebstoffschicht
- 198: Schaumfolienlage
- 200: zweite Klebstoffschicht
- 202: Substrat
- 204: dritte Klebstoffschicht
- 206: Antenne
- 208: Chip
- 210: vierte Klebstoffschicht
- 212: fünfte Klebstoffschicht
- 214: Silikonisierte Trägerfolie

## Patentansprüche

1. Verfahren zur Herstellung eines RFID-Etiketts für den UHF Frequenzbereich gemäß Anspruch 7, mit einem Substrat auf dem eine als Mikrochip ausgebildete elektronische Speicher- und Sendevorrichtung, eine mit dem Mikrochip galvanisch verbundene Primärantenne sowie eine mit der Primärantenne gekoppelte Sekundärantenne angeordnet sind, wobei das Substrat als maschinell verarbeitbares Endlosband in Rollenform mit einer Vielzahl von darauf angeordneten Sekundärantennen ausgebildet ist, **gekennzeichnet durch** die folgenden Schritte:
- Ausstanzen der Sekundärantenne aus einer leitenden metallischen Schicht und Abdecken der Sekundärantenne mit einer transparenten selbstklebenden Folie;
- Ausstanzen eines Stegs aus einer selbstklebenden Schaumfolie;
- Aufbringen der Primärantenne auf die abgedeckte Sekundärantenne an einer dafür vorgesehenen Position und Laminieren eines selbstklebenden Deckmaterials; und
- Aufbringen eines Klebstoffs auf einen Teilbereich der Oberseite der abgedeckten Sekundärantenne, Laminieren der Einheit aus Primär- und Sekundärantenne auf die selbstklebende Schaumfolie und Ausstanzen des zum späteren Falten vorgesehenen RFID-Etiketts.

2. Verfahren zur Herstellung eines RFID-Etiketts für den UHF Frequenzbereich gemäß Anspruch 8, mit einem Substrat auf dem eine als Mikrochip ausgebildete elektronische Speicher- und Sendevorrichtung, eine mit dem Mikrochip galvanisch verbundene Primärantenne sowie eine mit der Primärantenne gekoppelte Sekundärantenne angeordnet sind, wobei das Substrat als maschinell verarbeitbares Endlosband in Rollenform mit einer Vielzahl von darauf angeordneten Sekundärantennen ausgebildet ist, **gekennzeichnet durch** die folgenden Schritte:
- Ausstanzen der Sekundärantenne aus einer leitenden, metallischen Schicht und Abdecken der Sekundärantenne mit einer transparenten selbstklebenden Folie;
- Ausstanzen eines Stegs aus einer selbstklebenden Schaumfolie;
- Laminieren eines selbstklebenden Deckmaterials auf einen Teilbereich der Oberseite der selbstklebenden Sekundärantenne und
- Aufbringen eines Klebstoffs auf einen Teilbereich der Oberseite der selbstklebenden Sekundärantenne, Laminieren auf die selbstklebende Schaumfolie und Austanzen der zum späteren Falten vorgesehenen UHF-Antenne;
- Herstellung eines UHF-Loop-Etiketts; und
- Aufbringen des UHF-Loop-Etiketts auf die UHF-Antenne zur Bildung des zum späteren Falten vorgesehenen RFID-Etiketts.

3. Verfahren nach Anspruch 1 oder 2, **dadurch gekennzeichnet, dass** die leitende, metallische Schicht eine selbstklebende Aluminiumfolie ist.

4. Verfahren zur Herstellung eines RFID-Etiketts für den UHF Frequenzbereich gemäß Anspruch 9, mit einem Substrat auf dem eine als Mikrochip ausgebildete elektronische Speicher- und Sendevorrichtung und eine mit dem Mikrochip galvanisch verbundene UHF-Antenne angeordnet sind, wobei das Substrat als maschinell verarbeitbares Endlosband in Rollenform mit einer Vielzahl von darauf angeordneten UHF-Inlays ausgebildet ist, **gekennzeichnet durch** die folgenden Schritte:
- Herstellung eines UHF-Inlays mit Chip als einstückiges Bauteil wobei die UHF-Antenne durch Ätzen, Drucken oder Stanzen auf ein Papier- oder Foliensubstrat aufgebracht ist und der UHF-Chip oder UHF-Strap direkt auf die UHF-Antenne elektrisch leitfähig verbunden ist,
- Austanzen eines Stegs aus einer selbstklebenden Schaumfolie,
- Laminieren eines selbstklebenden Deckmaterials auf einen Teilbereich der Oberseite des UHF-Inlays und Laminieren einer Transfer-Folie auf die komplette Unterseite des UHF-Inlays, und
- Aufbringen eines Klebstoffs auf einen Teilbereich der Oberseite des selbstklebenden UHF-Inlays, Laminieren auf die selbstklebende Schaumfolie und Ausstanzen des zum späteren Falten vorgesehenen RFID-Etiketts.

5. Verfahren nach einem der Ansprüche 1 bis 4, **dadurch gekennzeichnet, dass** durch das mittige oder außermittige Ausstanzen eines Stegs aus der selbstklebenden Schaumfolie eine Falzhilfe geschaffen ist, die das Falten des RFID-Etiketts vor der Anbringung oder während der Anbringung an seinen Bestimmungsort erleichtert.

6. Verfahren nach einem der Ansprüche 1 bis 5, **dadurch gekennzeichnet, dass** das RFID-Etikett nach dem Stanzen noch nicht gefaltet ist und dass der Formschluss mit ebenen oder gekrümmten metallischen Oberflächen oder mit Flüssigkeit befüllten Behältern erst bei dem Falten und Anbringen auf ebenen Flächen oder dem Anbringen und Falten auf gekrümmten Flächen geschaffen wird.

7. RFID-Etikett mit UHF-Loop, **gekennzeichnet durch** eine silikonisierte Trägerfolie (82) als Substrat, wobei auf diesem Substrat in Reihenfolge aufgebracht sind eine erste Klebstoffschicht (84), eine Schaumfolienlage (86), eine zweite Klebstoffschicht (88), eine Sekundärantenne (90), eine dritte Klebstoffschicht (92), eine Folienlage (94), eine vierte Klebstoffschicht (96), mit der eine Primärantenne (98) mit einem Chip (100) auf der Folienlage (94) aufgeklebt ist, eine fünfte Klebstoffschicht (102), mit der das bedruckbare oder bedruckte Deckmaterial (52) die Primärantenne überdeckend auf die Folienlage aufgeklebt ist, sowie eine sechste Klebstoffschicht (104), mit der das RFID-Etikett an seinem Bestimmungsort befestigt wird, wobei die sechste Klebstoffschicht (104) mit einer silikonisierten Trägerfolie (106) abgedeckt ist.

8. RFID-Etikett mit UHF-Loop-Etikett, **gekennzeichnet durch** eine silikonisierte Trägerfolie (138) als Substrat, wobei auf diesem Substrat in Reihenfolge aufgebracht sind eine erste Klebstoffschicht (140), eine Schaumfolienlage (142), eine zweite Klebstoffschicht (146), eine Sekundärantenne (148), eine dritte Klebstoffschicht (150), eine Folienlage (152), eine vierte Klebstoffschicht (154), eine Schicht aus Deckmaterial (156), eine fünfte Klebstoffschicht (158), mit der das RFID-Etikett an seinem Bestimmungsort befestigt wird, wobei die fünfte Klebstoffschicht (158) mit einer silikonisierten Trägerfolie (160) abgedeckt ist, sowie ein UHF-Loop-Etikett (162).

9. RFID-Etikett mit UHF-Inlay, **gekennzeichnet durch** eine silikonisierte Trägerfolie (194) als Substrat, wobei auf diesem Substrat in Reihenfolge aufgebracht sind eine erste Klebstoffschicht (196), eine Schaumfolienlage (198), eine zweite Klebstoffschicht (200), ein UHF-Inlay als einstückiges Bauteil (202, 204, 206, 208), eine dritte Klebstoffschicht (210), eine Schicht aus Deckmaterial (52), eine vierte Klebstoffschicht (212), mit der das RFID-Etikett an seinem Bestimmungsort befestigt wird, wobei die vierte Klebstoffschicht (212) mit einer silikonisierten Trägerfolie (214) abgedeckt ist.

10. RFID-Etikett nach einem der Ansprüche 7 bis 9, **dadurch gekennzeichnet, dass** zwei durch eine Nut (144) in der Schaumfolienlage (86, 142, 198) gebildete Flügel des ungefalteten RFID-Etiketts zum Anbringen auf eine ebene Oberfläche gleiche Längen aufweisen und zum Anbringen auf gekrümmten Oberflächen oder über eine Kante unterschiedliche Längen aufweisen.

11. Verwendung eines RFID-Etiketts nach Anspruch 10, **dadurch gekennzeichnet, dass** der kürzere Flügel beim Aufkleben des RFID-Etiketts auf eine gekrümmte Oberfläche zuerst aufgeklebt wird und anschließend der längere Flügel über den kürzeren Flügel gefaltet und spannungs- und verwerfungsfrei mit dem kürzeren Flügel verklebt wird, wobei aufgrund der größeren Länge des zweiten Flügels die freien Flügelenden des Etiketts bündig miteinander abschließen.

12. Verwendung eines RFID-Etiketts nach einem der Ansprüche 7 bis 9, **dadurch gekennzeichnet, dass** beim Anbringen des RFID-Etiketts auf eine ebene Oberfläche das RFID-Etikett von der silikonisierten Trägerfolie (82, 138, 194) abgenommen und mit Hilfe einer Nut (144) in der Schaumfolienlage (86, 142, 198) um 180° gefaltet wird, hierbei zwei durch die Nut gebildete, gleich lange Flügel spannungs- und verwerfungsfrei miteinander verklebt werden und anschließend die silikonisierte Trägerfolie (106, 160, 214) abgezogen und das RFID-Etikett auf die ebene Oberfläche an seinem Bestimmungsort aufgeklebt wird.

13. Verwendung eines RFID-Etiketts nach Anspruch 10, **dadurch gekennzeichnet, dass** beim Anbringen des RFID-Etiketts auf eine gekrümmte Oberfläche oder über eine Kante das RFID-Etikett von der silikonisierten Trägerfolie (82, 138, 194) abgenommen und mit Hilfe der Nut (144) in der Schaumfolienlage (86, 142, 198) um 90° vorgefaltet wird, so dass die silikonisierte Trägerfolie (106, 160, 214) entfernbar ist und als Bedienungshilfe oder Anti-Haft Barriere zum Andrücken des kürzeren Flügels des RFID-Etiketts beim Aufkleben auf die gekrümmte Oberfläche oder über die Kante an seinem Bestimmungsort dient, und dass die Bedienungshilfe oder Anti-Haft Barriere vor dem Falten und Verkleben des längeren Flügels über den kürzeren Flügel wieder abgenommen wird.

## Claims

1. Method for manufacturing an RFID label for the UHF frequency range according to claim 7, comprising a substrate on which an electronic storage and transmission device designed as a microchip, a primary antenna galvanically connected to the microchip, and a secondary antenna coupled to the primary antenna are arranged, wherein the substrate is designed as a machine-processable continuous strip in roll form having a plurality of secondary antennas arranged thereon, **characterized by** the following steps:
- punching the secondary antenna from a conductive metal layer and covering the secondary antenna with a transparent self-adhesive film;
- punching a web from a self-adhesive foam film;
- applying the primary antenna to the covered secondary antenna at a designated position and laminating a self-adhesive top material; and
- applying an adhesive to a portion of the upper face of the covered secondary antenna, laminating the unit consisting of primary and secondary antennas onto the self-adhesive foam film, and punching the RFID label intended for later folding.

2. Method for manufacturing an RFID label for the UHF frequency range according to claim 8, comprising a substrate on which an electronic storage and transmission device designed as a microchip, a primary antenna galvanically connected to the microchip, and a secondary antenna coupled to the primary antenna are arranged, wherein the substrate is designed as a machine-processable continuous strip in roll form having a plurality of secondary antennas arranged thereon, **characterized by** the following steps:
- punching the secondary antenna from a conductive metal layer and covering the secondary antenna with a transparent self-adhesive film;
- punching a web from a self-adhesive foam film;
- laminating a self-adhesive top material onto a portion of the upper face of the self-adhesive secondary antenna, and
- applying an adhesive to a portion of the upper face of the self-adhesive secondary antenna, laminating it onto the self-adhesive foam film, and punching the UHF antenna intended for later folding;
- manufacturing an UHF loop label; and
- applying the UHF loop label to the UHF antenna to form the RFID label intended for later folding.

3. Method according to claim 1 or claim 2, **characterized in that** the conductive metal layer is a self-adhesive aluminum film.

4. Method for manufacturing an RFID label for the UHF frequency range according to claim 9, comprising a substrate on which an electronic storage and transmission device designed as a microchip and a UHF antenna galvanically connected to the microchip are arranged, wherein the substrate is designed as a machine-processable continuous strip in roll form having a plurality of UHF inlays arranged thereon, **characterized by** the following steps:
- manufacturing a UHF inlay comprising a chip as a single-piece component, wherein the UHF antenna is applied to a paper or film substrate by etching, printing or stamping, and the UHF chip or UHF strap is connected directly to the UHF antenna in an electrically conductive manner,
- punching a web from a self-adhesive foam film,
- laminating a self-adhesive top material onto a portion of the upper face of the UHF inlay and laminating a transfer film onto the entire lower face of the UHF inlay, and
- applying an adhesive to a portion of the upper face of the self-adhesive UHF inlay, laminating it onto the self-adhesive foam film, and punching the RFID label intended for later folding.

5. Method according to any of claims 1 to 4, **characterized in that**, by punching a web centrally or off-center from the self-adhesive foam film, a folding aid is provided to facilitate folding of the RFID label prior to application or during application at its intended location.

6. Method according to any of claims 1 to 5, **characterized in that** the RFID label is not yet folded after punching, **and in that** the form fitting-connection to planar or curved metal surfaces or containers filled with liquid is established only during the folding and application to planar surfaces or the folding and application to curved surfaces.

7. RFID label comprising a UHF loop, **characterized by** a siliconized carrier film (82) as a substrate, wherein a first adhesive layer (84), a foam film layer (86), a second adhesive layer (88), a secondary antenna (90), a third adhesive layer (92), a film layer (94), a fourth adhesive layer (96), by means of which a primary antenna (98) having a chip (100) is adhered to the film layer (94), a fifth adhesive layer (102), by means of which the printable or printed top material (52) is adhered to the film layer so as to cover the primary antenna, and a sixth adhesive layer (104), by means of which the RFID label is fastened at its intended location, are applied to this substrate in sequence, wherein the sixth adhesive layer (104) is covered with a siliconized carrier film (106).

8. RFID label comprising a UHF loop label, **characterized by** a siliconized carrier film (138) as a substrate, wherein a first adhesive layer (140), a foam film layer (142), a second adhesive layer (146), a secondary antenna (148), a third adhesive layer (150), a film layer (152), a fourth adhesive layer (154), a layer of top material (156), and a fifth adhesive layer (158), by means of which the RFID label is fastened at its intended location, are applied to this substrate in sequence, wherein the fifth adhesive layer (158) is covered with a siliconized carrier film (160), and by a UHF loop label (162).

9. RFID label comprising a UHF inlay, **characterized by** a siliconized carrier film (194) as a substrate, wherein a first adhesive layer (196), a foam film layer (198), a second adhesive layer (200), a UHF inlay as a single-piece component (202, 204, 206, 208), a third adhesive layer (210), a layer of top material (52), and a fourth adhesive layer (212), by means of which the RFID label is fastened at its intended location, are applied to this substrate in sequence, wherein the fourth adhesive layer (212) is covered with a siliconized carrier film (214).

10. RFID label according to any of claims 7 to 9, **characterized in that** two wings of the unfolded RFID label, formed by a groove (144) in the foam film layer (86, 142, 198), have equal lengths for application to a planar surface and have different lengths for application to curved surfaces or over an edge.

11. Use of an RFID label according to claim 10, **characterized in that**, when the RFID label is adhered to a curved surface, the shorter wing is adhered first and then the longer wing is folded over the shorter wing and adhered to the shorter wing without tension or distortion, wherein the free wing ends of the label are flush with one another due to the greater length of the second wing.

12. Use of an RFID label according to any of claims 7 to 9,
**characterized in that**, when the RFID label is applied to a planar surface, the RFID label is removed from the siliconized carrier film (82, 138, 194) and folded through 180° with the aid of a groove (144) in the foam film layer (86, 142, 198); in this case, two wings of equal length, formed by the groove, are adhered to one another without tension or distortion, and then the siliconized carrier film (106, 160, 214) is pulled off and the RFID label is adhered to the planar surface at its intended location.

13. Use of an RFID label according to claim 10, **characterized in that,** when the RFID label is applied to a curved surface or over an edge, the RFID label is removed from the siliconized carrier film (82, 138, 194) and pre-folded through 90° with the aid of the groove (144) in the foam film layer (86, 142, 198), such that the siliconized carrier film (106, 160, 214) is removable and is used as an operating aid or anti-adhesion barrier for pressing on the shorter wing of the RFID label during adhesion to the curved surface or over the edge at its intended location, **and in that** the operating aid or anti-adhesion barrier is removed again prior to the folding and adhesion of the longer wing over the shorter wing.

## Revendications

1. Procédé pour la fabrication d'une étiquette RFID pour la gamme de fréquences UHF selon la revendication 7, comportant un substrat sur lequel sont disposés un dispositif électronique de mémorisation et d'émission réalisé sous forme de micropuce, une antenne primaire connectée de manière galvanique à la micropuce ainsi qu'une antenne secondaire couplée à l'antenne primaire, dans lequel le substrat est réalisé sous forme de bande sans fin pouvant être traitée mécaniquement sous forme de rouleau avec une pluralité d'antennes secondaires disposées sur celle-ci, **caractérisé par** les étapes suivantes :
- découpage de l'antenne secondaire dans une couche métallique conductrice et recouvrement de l'antenne secondaire d'un film autocollant transparent ;
- découpage d'une barrette dans un film mousse autocollant ;
- application de l'antenne primaire sur l'antenne secondaire recouverte à un endroit prévu à cet effet et stratification d'un matériau de recouvrement autocollant ; et
- application d'un adhésif sur une zone partielle de la face supérieure de l'antenne secondaire recouverte, stratification de l'unité formée par l'antenne primaire et l'antenne secondaire sur le film mousse autocollant et découpage de l'étiquette RFID prévue pour être pliée ultérieurement.

2. Procédé pour la fabrication d'une étiquette RFID pour la gamme de fréquences UHF selon la revendication 8, comportant un substrat sur lequel sont disposés un dispositif électronique de mémorisation et d'émission réalisé sous forme de micropuce, une antenne primaire connectée de manière galvanique à la micropuce ainsi qu'une antenne secondaire couplée à l'antenne primaire, dans lequel le substrat est réalisé sous forme de bande sans fin pouvant être traitée mécaniquement sous forme de rouleau avec une pluralité d'antennes secondaires disposées sur celle-ci, **caractérisé par** les étapes suivantes :
- découpage de l'antenne secondaire dans une couche métallique conductrice et recouvrement de l'antenne secondaire d'un film autocollant transparent ;
- découpage d'une barrette dans un film mousse autocollant ;
- stratification d'un matériau de recouvrement autocollant sur une zone partielle de la face supérieure de l'antenne secondaire autocollante ; et
- application d'un adhésif sur une zone partielle de la face supérieure de l'antenne secondaire autocollante, stratification sur le film mousse autocollant et découpage de l'antenne UHF prévue pour être pliée ultérieurement ;
- fabrication d'une étiquette à boucle UHF ; et
- application de l'étiquette à boucle UHF sur l'antenne UHF pour former l'étiquette RFID prévue pour être pliée ultérieurement.

3. Procédé selon la revendication 1 ou 2, **caractérisé en ce que** la couche métallique conductrice est un film aluminium autocollant.

4. Procédé pour la fabrication d'une étiquette RFID pour la gamme de fréquences UHF selon la revendication 9, comportant un substrat sur lequel sont disposés un dispositif électronique de mémorisation et d'émission réalisé sous forme de micropuce ainsi qu'une antenne UHF connectée de manière galvanique à la micropuce, dans lequel le substrat est réalisé sous forme de bande sans fin pouvant être traitée mécaniquement sous forme de rouleau avec une pluralité d'incrustations UHF disposées sur celle-ci, **caractérisé par** les étapes suivantes :
- fabrication d'une incrustation UHF comportant une puce sous forme de composant monobloc, dans lequel l'antenne UHF est appliquée par gravure, impression ou estampage sur un substrat en papier ou en film et la puce UHF ou la languette UHF est connectée directement à l'antenne UHF de manière électriquement conductrice,
- découpage d'une barrette dans un film mousse autocollant,
- stratification d'un matériau de recouvrement autocollant sur une zone partielle de la face supérieure de l'incrustation UHF et stratification d'un film de transfert sur toute la face inférieure de l'incrustation UHF, et
- application d'un adhésif sur une zone partielle de la face supérieure de l'incrustation UHF autocollante, stratification sur le film mousse autocollant et découpage de l'étiquette RFID prévue pour être pliée ultérieurement.

5. Procédé selon l'une des revendications 1 à 4, **caractérisé en ce que** le découpage centré ou excentré d'une barrette dans le film mousse autocollant crée une aide au pliage qui facilite le pliage de l'étiquette RFID avant son application ou pendant son application à son emplacement de destination.

6. Procédé selon l'une des revendications 1 à 5, **caractérisé en ce que** l'étiquette RFID n'est pas encore pliée après le découpage **et en ce que** la liaison par complémentarité de forme avec des surfaces métalliques planes ou incurvées ou avec des récipients remplis de liquide n'est créée que lors du pliage et de l'application sur des surfaces planes ou de l'application et du pliage sur des surfaces incurvées.

7. Étiquette RFID comportant une boucle UHF, **caractérisée par** un film de support siliconé (82) en tant que substrat, dans laquelle sont appliquées sur ledit substrat, dans l'ordre, une première couche d'adhésif (84), une couche de film mousse (86), une deuxième couche d'adhésif (88), une antenne secondaire (90), une troisième couche d'adhésif (92), une couche de film (94), une quatrième couche d'adhésif (96) avec laquelle une antenne primaire (98) comportant une puce (100) est collée sur la couche de film (94), une cinquième couche d'adhésif (102) avec laquelle le matériau de recouvrement (52) imprimable ou imprimé est collé sur la couche de film de manière à recouvrir l'antenne primaire, ainsi qu'une sixième couche d'adhésif (104) avec laquelle l'étiquette RFID est fixée à son emplacement de destination, dans laquelle la sixième couche d'adhésif (104) est recouverte d'un film de support siliconé (106).

8. Étiquette RFID comportant une étiquette à boucle UHF, **caractérisée par** un film de support siliconé (138) en tant que substrat, dans laquelle sont appliquées sur ledit substrat, dans l'ordre, une première couche d'adhésif (140), une couche de film mousse (142), une deuxième couche d'adhésif (146), une antenne secondaire (148), une troisième couche d'adhésif (150), une couche de film (152), une quatrième couche d'adhésif (154), une couche de matériau de recouvrement (156), une cinquième couche d'adhésif (158) avec laquelle l'étiquette RFID est fixée à son emplacement de destination, dans laquelle la cinquième couche d'adhésif (158) est recouverte d'un film de support siliconé (160), et une étiquette à boucle UHF (162).

9. Étiquette RFID comportant une incrustation UHF, **caractérisée par** un film de support siliconé (194) en tant que substrat, dans laquelle sont appliquées sur ledit substrat, dans l'ordre, une première couche d'adhésif (196), une couche de film mousse (198), une deuxième couche d'adhésif (200), une incrustation UHF en tant que composant monobloc (202, 204, 206, 208), une troisième couche d'adhésif (210), une couche de matériau de recouvrement (52), une quatrième couche d'adhésif (212) avec laquelle l'étiquette RFID est fixée à son emplacement de destination, dans laquelle la quatrième couche d'adhésif (212) est recouverte d'un film de support siliconé (214).

10. Étiquette RFID selon l'une des revendications 7 à 9,
**caractérisée en ce que** deux ailettes de l'étiquette RFID non pliée, formées par une rainure (144) dans la couche de film mousse (86, 142, 198), présentent des longueurs égales pour l'application sur une surface plane et présentent des longueurs différentes pour l'application sur des surfaces incurvées ou sur un bord.

11. Utilisation d'une étiquette RFID selon la revendication 10,
**caractérisée en ce que,** lors du collage de l'étiquette RFID sur une surface incurvée, l'ailette la plus courte est d'abord collée, puis l'ailette la plus longue est pliée sur l'ailette la plus courte et collée sans tension ni déformation à l'ailette la plus courte, dans laquelle les extrémités d'ailettes libres de l'étiquette se terminent à fleur l'une avec l'autre en raison de la longueur plus grande de la seconde ailette.

12. Utilisation d'une étiquette RFID selon l'une des revendications 7 à 9, **caractérisée en ce que,** lors de l'application de l'étiquette RFID sur une surface plane, l'étiquette RFID est retirée du film de support siliconé (82, 138, 194) et, à l'aide d'une rainure (144) dans la couche de film mousse (86, 142, 198), est pliée à 180°, deux ailettes de même longueur formées par la rainure sont collées l'une à l'autre sans tension ni déformation, puis le film de support siliconé (106, 160, 214) est retiré et l'étiquette RFID est collée sur la surface plane à son emplacement de destination.

13. Utilisation d'une étiquette RFID selon la revendication 10,
**caractérisée en ce que,** lors de l'application de l'étiquette RFID sur une surface incurvée ou sur un bord, l'étiquette RFID est retirée du film de support siliconé (82, 138, 194) et est prépliée à 90° à l'aide de la rainure (144) dans la couche de film mousse (86, 142, 198), de sorte que le film de support siliconé (106, 160, 214) peut être retiré et sert d'aide à la manipulation ou de barrière antiadhésive pour presser l'ailette la plus courte de l'étiquette RFID lors du collage sur la surface incurvée ou sur le bord à son emplacement destination, **et en ce que** l'aide à la manipulation ou la barrière antiadhésive est à nouveau retirée avant le pliage et le collage de l'ailette la plus longue sur l'ailette la plus courte.
